# EUROPÄISCHE PATENTSCHRIFT

(11) **EP 1 513 035 B1**
(45) Veröffentlichungstag und Bekanntmachung des Hinweises auf die Patenterteilung: **07.03.2012**
(21) Anmeldenummer: 04019104.1
(22) Anmeldetag: 11.08.2004
(51) Int. Cl.: G05B 19/05

(54) **Echtzeitsteuerverfahren für eine Steuerungseinrichtung eines industriellen technischen Prozesses und Echtzeitbetriebsverfahren für eine Recheneinrichtung**
Real-time control method for a control apparatus for a industrial technical process and real-time operating method for a computing apparatus
Méthode de commande en temps réel pour un dispositif de commande d'un processus industriel et méthode de commande en temps réel pour un ordinateur

(30) Priorität: 02.09.2003 DE 10340403
(43) Veröffentlichungstag der Anmeldung: 09.03.2005
(60) Teilanmeldung: 10011919.7
(73) Patentinhaber: SIEMENS AKTIENGESELLSCHAFT, 80333 München (DE)
(72) Erfinder: Dolansky, Stefan, 90518 Altdorf (DE)

(56) Entgegenhaltungen:
- DE-A- 3 534 465
- DE-A- 19 906 695
- US-A- 5 530 643
- US-A- 5 796 936
- WELLENREUTHER, ZASTROW: "Automatisieren mit SPS Theorie und Praxis" August 2001 (2001-08), VIEWEG , DEUTSCHLAND , XP002309008 * Seite 1- - Seite 29 *
- PETIG M: "NETZWERKVARIABLEN - DER WEG ZUR VERTEILTEN SPS" ELEKTROTECHNISCHE ZEITSCHRIFT - ETZ, VDE VERLAG GMBH. BERLIN, DE, Bd. 121, Nr. 15, 2000, Seiten 6-9, XP001104335 ISSN: 0948-7387
- KOUTHON T ET AL: "Distributing PLC control" INDUSTRIAL ELECTRONICS, CONTROL, AND INSTRUMENTATION, 1995., PROCEEDINGS OF THE 1995 IEEE IECON 21ST INTERNATIONAL CONFERENCE ON ORLANDO, FL, USA 6-10 NOV. 1995, NEW YORK, NY, USA,IEEE, US, 6. November 1995 (1995-11-06), Seiten 1614-1619, XP010154964 ISBN: 0-7803-3026-9

## Beschreibung

Die vorliegende Erfindung betrifft ein Echtzeitsteuerverfahren für eine Steuerungseinrichtung eines industriellen technischen Prozesses, mit folgenden, mit einer Zykluszeit wiederholt ausgeführten Schritten, wobei die Zykluszeit im Millisekundenbereich oder darunter liegt:
- eine Anzahl von Erfassungseinheiten erfasst Zustandssignale des Prozesses, wobei die erfassten Zustandssignale in ihrer Gesamtheit ein Abbild des Prozesses darstellen,
- jede der Erfassungseinheiten übermittelt die von ihr erfassten Zustandssignale an eine einzige logische Logikeinheit,
- die logische Logikeinheit übermittelt an jede der Steuereinheiten für die jeweilige Steuereinheit bestimmte Steuersignale, wobei die an die Steuereinheiten übermittelten Steuersignale in ihrer Gesamtheit den Steuerzustand für den Prozess darstellen,
- jede der Steuereinheiten wirkt entsprechend den an sie übermittelten Steuersignalen auf den Prozess ein.

Schließlich betrifft die vorliegende Erfindung eine Steuerungseinrichtung.

Steuerungseinrichtungen für industrielle technische Prozesse sind allgemein bekannt. Sie sind, je nach Anwendungsgebiet, z. B. als numerische Steuerungen (CNC) oder als speicherprogrammierbare Steuerungen (SPS) ausgebildet. Bei diesen Steuerungseinrichtungen werden mit einer Zykluszeit, die im Millisekundenbereich oder darunter liegt, folgende Schritte ausgeführt:
- Eine Anzahl von Erfassungseinheiten erfasst Zustandssignale des Prozesses, wobei die erfassten Zustandssignale in ihrer Gesamtheit ein Abbild des Prozesses darstellen.
- Jede der Erfassungseinheiten übermittelt die von ihr erfassten Zustandssignale an eine einzige logische Logikeinheit.
- Die logische Logikeinheit ermittelt unter Abarbeitung eines Steuerungsprogramms anhand des Abbildes des Prozesses einen Steuerzustand für den Prozess, der für eine Anzahl von Steuereinheiten Steuersignale enthält.
- Die logische Logikeinheit übermittelt an jede der Steuereinheiten die für die jeweilige Steuereinheit bestimmten Steuersignale, wobei die an die Steuereinheiten übermittelten Steuersignale in ihrer Gesamtheit den Steuerzustand für den Prozess darstellen.
- Jede der Steuereinheiten wirkt entsprechend den an sie übermittelten Steuersignalen auf den Prozess ein.

Ein typisches Beispiel dieser Vorgehensweise ist in dem Fachbuch "Automatisieren mit SPS - Theorie und Praxis" von G. Wellenreuther und D. Zastrow, ISBN 3-528-03910-8 beschrieben.

Beim Stand der Technik ist die Hardware, welche das Steuerungsprogramm ausführt, also prozessnah angeordnet. Daher muss die logische Logikeinheit stets die volle Funktionalität der Echtzeitanwendung vor Ort realisieren können. Wenn in einem derartigen Fall eine höhere Funktionalität gefordert wird, ist es oftmals notwendig, die logische Logikeinheit auszutauschen. Ferner ist es umständlich und kompliziert, eine neue Version einer Steuerungssoftware, insbesondere den Echtzeitkern, an alle implementierten Steuerungseinrichtungen zu verteilen.

Es sind auch schon sogenannte verteilte Steuerungssysteme (DCS = Distributed Control System) bekannt geworden. Beispielhaft wird auf den Fachaufsatz "Netzwerkvariablen - der Weg zur verteilten SPS" von Michael Petig, ETZ, Band 121, Nr. 15 (2000), Seiten 6 bis 9 verwiesen. Auch der Fachaufsatz "Distributing PLC control" von T. Kouthon et al., INDUSTRIAL ELECTRONICS, CONTROL AND INSTRUMENTATION, 1995, IEEE IECON 21st International Conference on Orlando, FL, USA, 6. bis 10. Nov. 1995, Seiten 1614 bis 1619, oder die DE 199 06 695 A1 können in diesem Zusammenhang genannt werden.

Bei einem verteilten Steuerungssystem ist eine Mehrzahl von Logikeinheiten vorhanden, wobei jeder Logikeinheit Erfassungseinheiten und Steuereinheiten zugeordnet sein können. Jede Logikeinheit nimmt von den ihr zugeordneten Erfassungseinheiten die von diesen Erfassungseinheiten erfassten Zustandssignale entgegen. Weiterhin übermittelt jede Logikeinheit an die ihr zugeordneten Steuereinheiten jeweils Steuersignale. Bezogen auf eine einzelne der Logikeinheiten stellen die Zustandssignale, die von den dieser Logikeinheit zugeordneten Erfassungseinheiten erfasst werden, jedoch nur einen Teil des Abbildes des Prozesses dar. Auch stellen die Steuersignale, die an die dieser Logikeinheit zugeordneten Steuereinheiten übermittelt werden, nur einen Teil des Steuerzustands des Prozesses dar.

In der Regel tauschen die Logikeinheiten untereinander nur ihre Zustandssignale aus, soweit dies erforderlich ist. In der Regel ermittelt sodann jede Logikeinheit alle Steuersignale, die an die Steuereinheiten, die der jeweiligen Logikeinheit zugeordnet sind, übermittelt werden sollen. In Einzelfällen ist es jedoch auch möglich, dass die Logikeinheiten Steuersignale untereinander austauschen.

Die Aufgabe der vorliegenden Erfindung besteht darin, diese Nachteile des Standes der Technik zu vermeiden.

Die Aufgabe wird bei einem Echtzeitsteuerverfahren dadurch gelöst, dass die logische Logikeinheit zumindest einen Teil des Abbildes des Prozesses über ein Übertragungsmedium an eine Recheneinrichtung übermittelt und von der Recheneinrichtung über das Übertragungsmedium zumindest einen Teil eines Steuerzustandes für den Prozess entgegen nimmt, wobei der Steuerzustand für eine Anzahl von Steuereinheiten Steuersignale enthält.

Es erfolgt also eine räumliche Trennung von industriellem technischem Prozess, Erfassungs- und Steuereinheiten und logischer Logikeinheit auf der einen Seite und Recheneinrichtung auf der anderen Seite. Somit ist es insbesondere möglich, die Recheneinrichtung und/oder den Echtzeitkern zu aktualisieren bzw. zu verbessern, ohne die logische Logikeinheit vor Ort austauschen zu müssen. Denn die zu erfassenden Zustandssignale und die an den Prozess auszugebenden Steuersignale sind von ihrem Umfang her unverändert geblieben. Die Rechenleistung zur Ermittlung der Steuersignale hingegen wird nicht mehr vor Ort benötigt. Auch ist ein Verteilen insbesondere eines Echtzeitkerns zum Betreiben der Recheneinrichtung nicht mehr erforderlich.

Das Übertragungsmedium kann sowohl in logischer Hinsicht als auch bezüglich seiner physikalischen Ausgestaltung beliebig geartet sein.

In logischer Hinsicht ist es beispielsweise möglich, dass das Übertragungsmedium ein Rechnernetz, z. B. das Internet oder ein LAN, ist. Ein LAN kann dabei insbesondere als IRTE realisiert sein. Auch kann das Übertragungsmedium eine Punkt-zu-Punkt-Verbindung sein, z. B. das Telefonnetz. Auch Mischformen sind möglich, man denke beispielsweise an das Anwählen eines an das Internet angeschlossenen Rechners über das Telefonnetz.

Bezüglich seiner physikalischen Ausgestaltung kann das Übertragungsmedium - alternativ oder ergänzend zueinander - einen drahtlosen und einen leitungsgebundenen Übertragungsmediumabschnitt umfassen.

Wenn die logische Logikeinheit während jedes Zyklusses überprüft, ob ihr von der Recheneinrichtung der Steuerzustand bzw. dessen Teil übermittelt wird, und beim Ausbleiben des Steuerzustands bzw. dessen Teils Notausgabesignale ermittelt und diese an die Anzahl von Steuereinheiten übermittelt, ist auch dann ein definiertes Verhalten des gesteuerten industriellen technischen Prozesses gewährleistet, wenn die Kommunikationsverbindung zwischen der logischen Logikeinheit und der Recheneinrichtung gestört oder unterbrochen ist oder die Recheneinrichtung aus anderen Gründen den Steuerzustand bzw. dessen Teil nicht oder nicht rechtzeitig an die logische Logikeinheit übermittelt.

Der industrielle technische Prozess ist prinzipiell beliebiger Natur. Insbesondere ist es möglich, dass er ein Produktionsprozess ist, beispielsweise ein Bearbeitungsprozess einer Werkzeugmaschine.

Wenn die Recheneinrichtung vor dem Beginn der zyklischen Ausführung der oben erwähnten Schritten einen Echtzeitteil eines von der Logikeinheit auszuführenden Computerprogramms an die logische Logikeinheit übermittelt, ist eine besonders flexible Programmierung der logischen Logikeinheit möglich.

Wenn die logische Logikeinheit vor dem Beginn der zyklischen Ausführung der oben erwähnten Schritte Parameterdaten des Prozesses an die Recheneinrichtung übermittelt, ist eine bessere Ermittlung des Steuerzustandes durch die Recheneinrichtung möglich.

Wenn die logische Logikeinheit vor dem Beginn der zyklischen Ausführung der oben erwähnten Schritte über das Übertragungsmedium an die Recheneinrichtung ein von der Recheneinrichtung auszuführendes Steuerungsprogramm übermittelt, ist die Zusammenarbeit zwischen der logischen Logikeinheit und der Recheneinrichtung besonders flexibel. Alternativ kann das Steuerungsprogramm aber auch schon vorab in der Recheneinrichtung hinterlegt sein. Auch ist es möglich, dass die logische Logikeinheit ein in der Recheneinrichtung hinterlegtes Steuerungsprogramm anwählt.

Die Zykluszeit kann fest vorgegeben sein. Es ist aber auch möglich, dass die Zykluszeit vor dem Beginn der zyklischen Ausführung der oben erwähnten Schritte von der logischen Logikeinheit oder der Recheneinrichtung an die jeweils andere Komponente übermittelt wird.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: eine Steuerungsanordnung,
- FIG 2: Zeitdiagramme,
- FIG 3: eine weitere Steuerungsanordnung und
- FIG 4 und 5: Ablaufdiagramme.

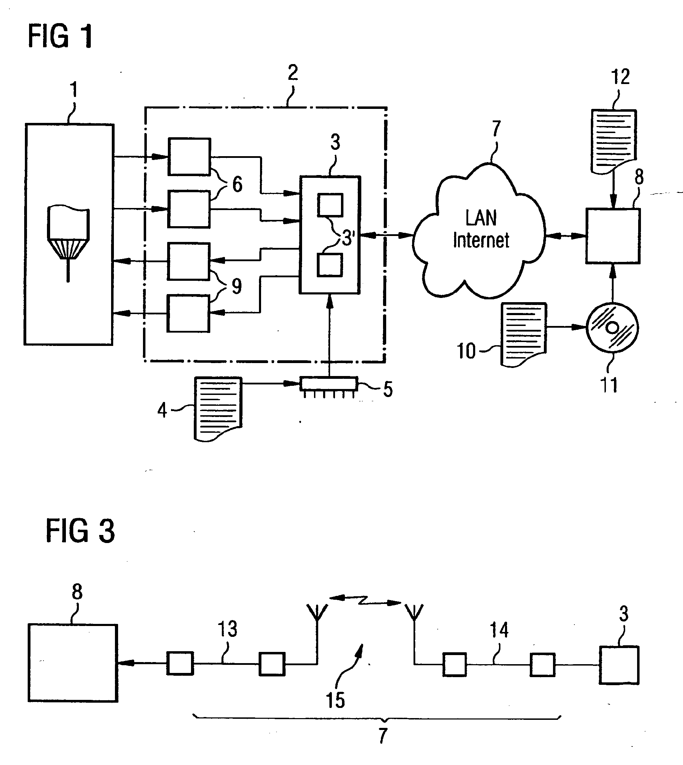

Gemäß FIG 1 wird ein industrieller technischer Prozess 1 von einer Steuerungseinrichtung 2 gesteuert. Der industrielle technische Prozess 1 ist, wie in FIG 1 durch die schematische Darstellung eines Bohrfutters und eines Bohrers angedeutet ist, im vorliegenden Fall ein Produktionsprozess 1, nämlich ein Bearbeitungsprozess 1 einer Werkzeugmaschine. Hiermit korrespondierend ist eine logische Logikeinheit 3 der Steuerungseinrichtung 2 als numerische Steuerung 3 (CNC 3) ausgebildet. Alternativ könnte die logische Logikeinheit 3 aber auch als echtzeitfähiger Industrie-PC, z.B. als Industrie-PC mit einem NRK (NRK = numeric realtime kernel) ausgebildet sein. Sie kann alternativ eine einzige oder - wie in FIG 1 dargestellt - mehrere physikalische Logikeinheiten 3' aufweisen.

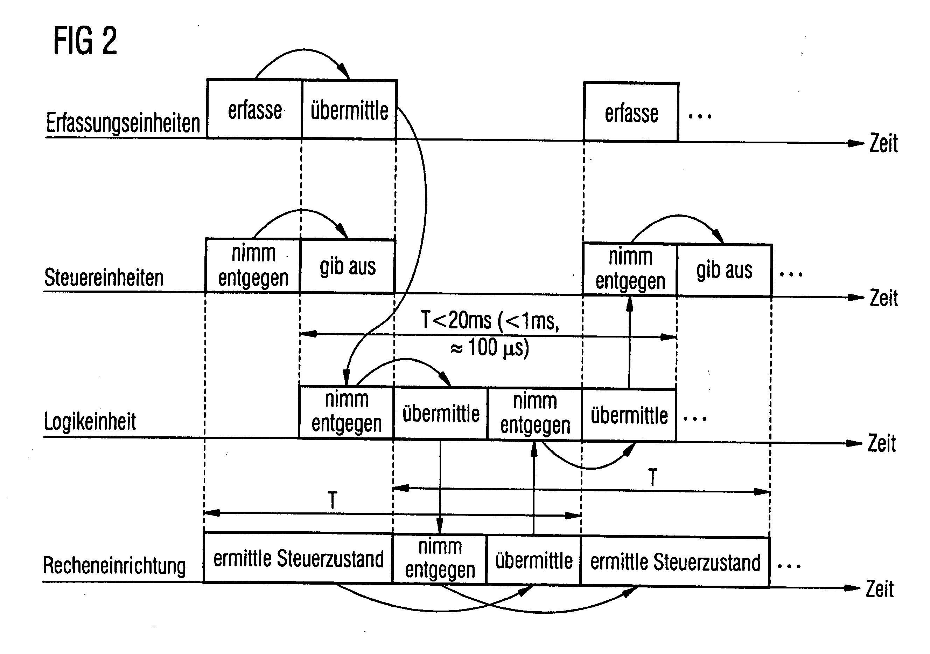

Die Logikeinheit 3 ist mit einem Computerprogramm 4 programmiert, das auf einem Datenträger 5, z.B. einem gepufferten SRAM, in (ausschließlich) maschinenlesbarer Form gespeichert ist. Auf Grund der Programmierung mit dem Computerprogramm 4 führt die Steuerungseinrichtung 2 ein nachfolgend in Verbindung mit den FIG 1 und 2 näher beschriebenes Echtzeitsteuerverfahren aus.

Gemäß den FIG 1 und 2 werden mittels Erfassungseinheiten 6 Zustandssignale des Prozesses 1 erfasst. Gemäß den FIG 1 und 2 werden dabei über die Erfassungseinheiten 6 alle Zustandssignale des Prozesses 1 erfasst. Die Zustandssignale stellen somit in ihrer Gesamtheit ein Abbild des Prozesses 1 dar.

Nach dem Erfassen der Zustandssignale werden diese von den Erfassungseinheiten 6 an die Logikeinheit 3 übermittelt. Die Logikeinheit 3 ist allen dabei Erfassungseinheiten 6 gemeinsam. Sie übermittelt das Abbild des Prozesses 1 (oder zumindest einen Teil davon) über ein Übertragungsmedium 7 an eine Recheneinrichtung 8.

Zwischen den Erfassungseinheiten 6 und der Logikeinheit 3 können intelligente Einheiten angeordnet sein. Auch können die Erfassungseinheiten 6 selbst eine Intelligenz aufweisen. Die Kommunikation mit der Recheneinheit 8 erfolgt aber ausschließlich durch die Logikeinheit 3.

Nach dem Übermitteln des Abbildes des Prozesses 1 an die Recheneinrichtung 8 nimmt die Logikeinheit 3 von der Recheneinrichtung 8 über das Übertragungsmedium 7 einen Steuerzustand für den Prozess 1 (oder zumindest einen Teil davon) entgegen. Der Steuerzustand enthält dabei Steuersignale für eine Anzahl von Steuereinheiten 9. Sie übermittelt die Steuersignale an die Steuereinheiten 9. Diese wirken dann entsprechend den ihnen übermittelten Steuersignalen auf den Prozess 1 ein.

Wie aus FIG 2 ersichtlich ist, werden die obenstehend beschriebenen Schritte innerhalb einer Zykluszeit T ausgeführt. Die Zykluszeit T liegt dabei im Millisekundenbereich. Typisch ist sie kleiner als 20 ms. Meist ist sie sogar kleiner als 1 ms und liegt z.B. bei etwa 100 µs.

Gemäß der vorliegenden Erfindung ist die Recheneinrichtung 8 also im Gegensatz zum Stand der Technik der Logikeinheit 3 nicht mehr fest zugeordnet (bzw. mit ihr identisch), sondern entsprechend FIG 1 mit der Logikeinheit 3 über das Übertragungsmedium 7 verbunden. Die Recheneinrichtung 8 kann daher an einem beliebigen Ort angeordnet sein, wenn nur durch das Übertragungsmedium 7 der erforderliche Datenaustausch möglich ist.

Das Übertragungsmedium 7 kann beliebig ausgebildet sein. Beispielsweise kann das Übertragungsmedium 7 als Rechnernetz, z.B. in Form eines LAN (LAN = local area network), ausgebildet sein. Ein Beispiel eines derartigen LAN ist ein sogenanntes IRTE (IRTE = industrial real time ethernet). Auch kann das Übertragungsmedium 7, sofern eine hinreichend schnelle und zuverlässige Kommunikation gewährleistet ist, das Internet sein.

Alternativ ist es auch möglich, dass das Übertragungsmedium 7 eine Punkt-zu-Punkt-Verbindung ist. Ein Beispiel einer derartigen Punkt-zu-Punkt-Verbindung ist das Telefonnetz.

Auch Mischformen sind denkbar, z.B. eine Ankopplung an ein Rechnernetz über das Telefonnetz.

Die Recheneinrichtung 8 selbst ist - siehe FIG 1 - ebenfalls mit einem Computerprogramm 10 programmiert. Auch dieses Computerprogramm 10 ist auf einem Datenträger 11, z.B. einer CD-ROM 11, hinterlegt und kann der Recheneinrichtung 8 auf diese Weise zugeführt werden. Auf Grund der Programmierung mit dem Computerprogramm 10 führt die Recheneinrichtung 8 ein Echtzeitbetriebsverfahren aus, das nachfolgend ebenfalls mit Bezug auf die FIG 1 und 2 näher beschrieben wird.

Gemäß den FIG 1 und 2 nimmt die Recheneinrichtung 8 von der Logikeinheit 3 über das Übertragungsmedium 7 das Abbild des Prozesses 1 (bzw. einen Teil davon) entgegen. Sie ermittelt daraufhin unter Abarbeitung eines Steuerungsprogramms 12 anhand des Abbildes des Prozesses 1 den Steuerzustand für den Prozess 1 (bzw. einen Teil davon). Das Steuerungsprogramm 12 korrespondiert dabei selbstverständlich mit dem industriellen technischen Prozess 1. Wenn der Prozess 1 ein Produktionsprozess 1 ist, z.B. ein Bearbeitungsprozess 1 einer Werkzeugmaschine, ist auch das Steuerungsprogramm 12 ein Steuerungsprogramm 12 für einen derartigen Prozess 1. Der Begriff "Steuerungsprogramm" umfasst dabei nur das Anwendungsprogramm, bei einem Werkzeugmaschinenprogramm also z.B. ein Teileprogramm gemäß DIN 66025, nicht aber ein Betriebssystem. Das (Echtzeit-)Betriebssystem ist vielmehr Bestandteil des Computerprogramms 10.

Der von der Recheneinrichtung 8 ermittelte Steuerzustand wird von der Recheneinrichtung 8 über das Übertragungsmedium 7 schließlich an die Logikeinheit 3 übermittelt.

Auch die Recheneinrichtung 8 führt die von ihr ausgeführten Schritte innerhalb der Zykluszeit T aus. Die Zykluszeit T ist dabei die gleiche Zykluszeit T, mit der auch die Logikeinheit 3 ihre Schritte ausführt.

Bei der obigen Darstellung gemäß FIG 1 wurde mehr die logische Ausgestaltung des Übertragungsmediums 7 hervorgehoben. Die physikalische Ausgestaltung des Übertragungsmediums 7 wird nachstehend in Verbindung mit FIG 3 näher erläutert. Die Darstellung gemäß FIG 3 ist dabei rein beispielhaft.

Gemäß FIG 3 weist das Übertragungsmedium 7 zwei Endabschnitte 13, 14 und einen Mittelabschnitt 15 auf. In den Endabschnitten 13, 14 erfolgt eine leitungsgebundene Datenübertragung, z.B. über Kupferdrähte oder Lichtwellenleiter. Im Mittelabschnitt 15 erfolgt eine drahtlose Datenübertragung, z.B. über eine Funkstrecke. Es ist aber auch eine andere Art der drahtlosen Datenübertragung, z. B. durch Infrarotsignale oder Ultraschallsignale, denkbar.

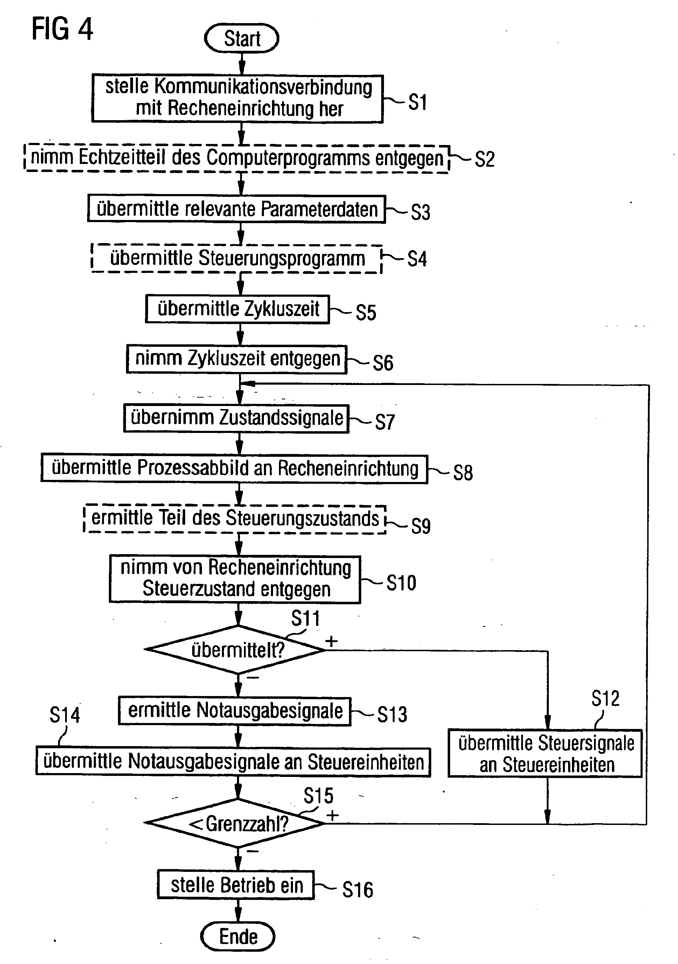

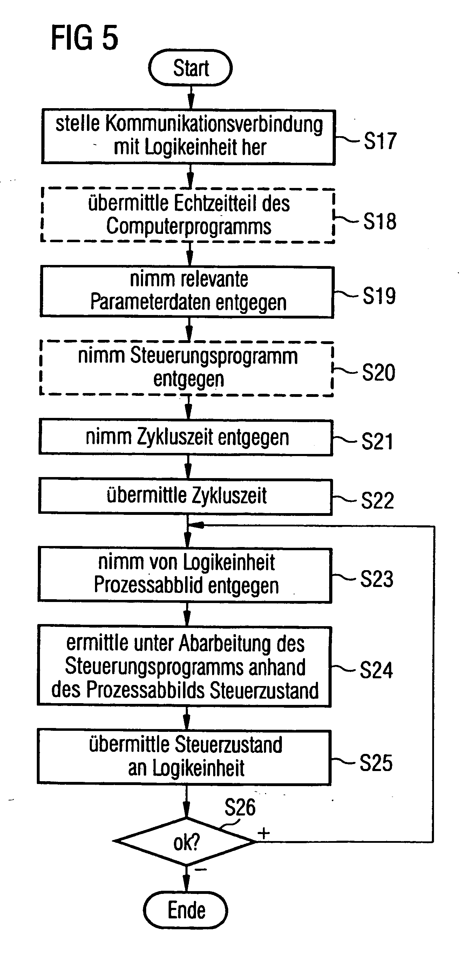

Die Logikeinheit 3 und die Recheneinrichtung 8 führen nicht nur die obenstehend in Verbindung mit den FIG 1 und 2 beschriebenen Aufgaben aus. Weitere von der Logikeinheit 3 und der Recheneinrichtung 8 ausgeführte Aufgaben werden nachfolgend in Verbindung mit den FIG 4 und 5 näher erläutert. Die FIG 4 bezieht sich dabei auf die Logikeinheit 3, die FIG 5 auf die Recheneinrichtung 8.

Gemäß FIG 4 stellt die Logikeinheit 3 zunächst in einem Schritt S1 eine Kommunikationsverbindung mit der Recheneinrichtung 8 her.

Es ist möglich, dass in der Steuerungseinrichtung 2 zunächst nur ein Basisprogramm vorhanden ist, das nur eine nicht echtzeitfähige Kommunikation mit der Recheneinrichtung 8 ermöglicht. In diesem Fall nimmt die Logikeinheit 3 in einem Schritt S2 über das Übertragungsmedium 7 einen Echtzeitteil des Computerprogramms 4 von der Recheneinrichtung 8 entgegen und speichert es im Datenträger 5 ab. Dieser Schritt S2 ist dabei nur optional und daher in FIG 4 nur gestrichelt dargestellt.

Ferner übermittelt die Logikeinheit 3 in einem Schritt S3 über das Übertragungsmedium 7 relevante Parameterdaten wie beispielsweise den konkreten Auf- und Ausbau der Maschine, mittels derer der Prozess 1 realisiert wird, an die Recheneinrichtung 8.

Als nächstes übermittelt die Logikeinheit 3 in einem Schritt S4 über das Übertragungsmedium 7 das Steuerungsprogramm 12 an die Recheneinrichtung 8. Auch der Schritt S4 ist nur optional und daher in FIG 4 nur gestrichelt dargestellt.

In einem Schritt S5 übermittelt die Logikeinheit 3 schließlich die Zykluszeit T über das Übertragungsmedium 7 an die Recheneinrichtung 8. Alternativ könnte in einem Schritt S6 die Logikeinheit 3 die Zykluszeit T auch über das Übertragungsmedium 7 von der Recheneinheit 8 entgegennehmen. Die Zykluszeit T könnte alternativ auch fest voreingestellt sein. Von den Schritten S5 und S6 wird also maximal einer ausgeführt.

Erst nach Ausführen dieser Schritte S1 bis S6 führt die Logikeinheit 3 Schritte S7 bis S15 aus. Im Schritt S7 übernimmt die Logikeinheit 3 die von den Erfassungseinheiten 6 erfassten Zustandssignale. Im Schritt S8 übermittelt sie das Abbild des Prozesses 1 über das Übertragungsmedium 7 an die Recheneinrichtung 8.

Für den Fall, dass die Recheneinrichtung 8 nur einen Teil des Steuerzustands ermittelt, führt die Logikeinheit 3 in einem Schritt S9 eine Ermittlung des restlichen Steuerzustandes durch. Der Schritt S9 ist also nicht unbedingt vorhanden und daher ebenfalls nur gestrichelt dargestellt.

Im Schritt S10 nimmt die Logikeinheit 3 den von der Recheneinrichtung 8 über das Übertragungsmedium 7 übermittelten Steuerzustand entgegen.

Im Schritt S11 prüft die Logikeinheit 3, ob ihr von der Recheneinrichtung 8 der Steuerzustand übermittelt wird. Wenn dies der Fall ist, gibt die Logikeinheit 3 im Schritt S12 die Steuersignale an die Steuereinheiten 9 weiter und springt zum Schritt S7 zurück. Anderenfalls ermittelt die Logikeinheit 3 im Schritt S13 selbst Notausgabesignale und übermittelt diese in einem Schritt S14 an die Steuereinheiten 9. Somit ist auch bei einem Ausbleiben der Steuersignale gewährleistet, dass die Logikeinheit 3 den Prozess 1 in definierter Weise steuert, z.B. einen Notbetrieb des Prozesses 1 aufrecht erhält.

Nach dem Schritt S14 wird im Schritt S15 überprüft, ob eine Grenzzahl von Übermittlungsversuchen überschritten ist. Wenn dies noch nicht der Fall ist, wird zum Schritt S7 zurück gesprungen. Anderenfalls wird in einem Schritt S16 der Betrieb des Prozesses 1 eingestellt.

Der in FIG 5 dargestellte, von der Recheneinrichtung 8 ausgeführte Ablauf korrespondiert im Wesentlichen mit dem in FIG 4 dargestellten, von der Logikeinheit 3 durchgeführten Ablauf.

Gemäß FIG 5 stellt die Recheneinrichtung 8 ebenfalls zunächst in einem Schritt S17 die Kommunikationsverbindung zur Logikeinheit 3 her.

Sodann übermittelt sie in einem Schritt S18 den Echtzeitteil des Computerprogramms 4. Der Schritt S18 ist - ebenso wie der Schritt S2 von FIG 4 - nur optional und daher in FIG 5 nur gestrichelt dargestellt.

Als nächstes nimmt die Recheneinrichtung 8 in einem Schritt S19 die relevanten Parameterdaten, z.B. über den konkreten Aufbau und den Ausbau der gesteuerten Maschine, entgegen. Ferner nimmt sie in einem Schritt S20 das Steuerungsprogramm 12 entgegen. Der Schritt S20 ist - ebenso wie der Schritt S4 von FIG 4 - nur optional und daher in FIG 5 nur gestrichelt dargestellt.

Schließlich nimmt die Recheneinrichtung 8 noch in einem Schritt S21 die Zykluszeit T entgegen. Alternativ könnte die Recheneinrichtung 8 auch in einem Schritt S22 die Zykluszeit T an die Logikeinheit 3 übermitteln. Auch könnte die Zykluszeit T fest vorgegeben sein. Auch von den Schritten S21 und S22 wird daher maximal einer ausgeführt.

Sodann führt die Recheneinrichtung 8 Schritte S23 bis S26 aus. Im Schritt S23 nimmt die Recheneinrichtung 8 von der Logikeinheit 3 das Abbild des Prozesses 1 entgegen. Im Schritt S24 ermittelt die Recheneinrichtung 8 unter Abarbeitung des Steuerungsprogramms 12 anhand des Abbildes des Prozesses 1 den Steuerzustand für den Prozess 1. Im Schritt S25 übermittelt die Recheneinrichtung 8 den Steuerzustand über das Übertragungsmedium 7 an die Logikeinheit 8.

Im Schritt S26 überprüft die Recheneinrichtung 8, ob die Übermittlung des Steuerzustands ordnungsgemäß war. Beispielsweise kann eine Quittierung von der Logikeinheit 3 abgefragt werden. Bei ordnungsgemäßer Übermittlung wird zum Schritt S23 zurück gesprungen, anderenfalls wird - gegebenenfalls erst nach mehreren erfolglosen Übermittlungsversuchen - die weitere Abarbeitung der Schritte S23 bis S26 beendet.

Obenstehend wurde die vorliegende Erfindung in Verbindung mit einer Steuerungseinrichtung 2 für eine Werkzeugmaschine beschrieben. Die vorliegende Erfindung ist aber nicht auf Werkzeugmaschinen beschränkt. Sie könnte ebenso bei anderen industriellen technischen Prozessen 1 eingesetzt werden. In diesem Fall ist die Steuerungseinrichtung 2 gegebenenfalls andersartig ausgebildet. Beispielsweise kann die Steuerungseinrichtung 2 in diesem Fall als speicherprogrammierbare Steuerung (SPS) ausgebildet sein.

## Patentansprüche

1. Echtzeitsteuerverfahren für eine Steuerungseinrichtung (2) eines industriellen technischen Prozesses (1), mit folgenden, mit einer Zykluszeit (T) wiederholt ausgeführten Schritten, wobei die Zykluszeit (T) im Millisekundenbereich oder darunter liegt:
- eine Anzahl von Erfassungseinheiten (6) erfasst Zustandssignale des Prozesses (1), wobei die erfassten Zustandssignale in ihrer Gesamtheit ein Abbild des Prozesses (1) darstellen,
- jede der Erfassungseinheiten (6) übermittelt die von ihr erfassten Zustandssignale an eine einzige logische Logikeinheit (3),
- die logische Logikeinheit (3) übermittelt zumindest einen Teil des Abbildes des Prozesses (1) über ein Übertragungsmedium (7) an eine Recheneinrichtung (8),
- die logische Logikeinheit (3) nimmt von der Recheneinrichtung (8) über das Übertragungsmedium (7) zumindest einen Teil eines Steuerzustandes für den Prozess (1) entgegen, wobei der Steuerzustand für eine Anzahl von Steuereinheiten (9) Steuersignale enthält,
- die logische Logikeinheit (3) übermittelt an jede der Steuereinheiten (9) die für die jeweilige Steuereinheit (9) bestimmten Steuersignale, wobei die an die Steuereinheiten (9) übermittelten Steuersignale in ihrer Gesamtheit den Steuerzustand für den Prozess (1) darstellen,
- jede der Steuereinheiten (9) wirkt entsprechend den an sie übermittelten Steuersignalen auf den Prozess (1) ein.

2. Echtzeitsteuerverfahren nach Anspruch 1,
**dadurch gekennzeichnet, dass** das Übertragungsmedium (7) ein Rechnernetz (7), z. B. das Internet oder ein LAN, ist.

3. Echtzeitsteuerverfahren nach Anspruch 1,
**dadurch gekennzeichnet, dass** das Übertragungsmedium (7) eine Punkt-zu-Punkt-Verbindung (7) ist.

4. Echtzeitsteuerverfahren nach Anspruch 1, 2 oder 3,
**dadurch gekennzeichnet, dass** das Übertragungsmedium (7) mindestens einen drahtlosen Übertragungsmediumabschnitt (15) umfasst.

5. Echtzeitsteuerverfahren nach einem der obigen Ansprüche,
**dadurch gekennzeichnet, dass** das Übertragungsmedium (7) mindestens einen leitungsgebundenen Übertragungsmediumabschnitt (13, 14) umfasst.

6. Echtzeitsteuerverfahren nach einem der obigen Ansprüche,
**dadurch gekennzeichnet, dass** die logische Logikeinheit (3) während jedes Zyklusses überprüft, ob ihr von der Recheneinrichtung (8) der Steuerzustand bzw. dessen Teil übermittelt wird, und dass die logische Logikeinheit (3) beim Ausbleiben des Steuerzustands bzw. dessen Teils Notausgabesignale ermittelt und diese an die Anzahl von Steuereinheiten (9) übermittelt.

7. Echtzeitsteuerverfahren nach einem der obigen Ansprüche,
**dadurch gekennzeichnet, dass** der industrielle technische Prozess (1) ein Produktionsprozess (1), insbesondere ein Bearbeitungsprozess (1) einer Werkzeugmaschine, ist.

8. Echtzeitsteuerverfahren nach einem der obigen Ansprüche,
**dadurch gekennzeichnet, dass** die logische Logikeinheit (3) vor dem Beginn der zyklischen Ausführung der in Anspruch 1 erwähnten Schritte einen Echtzeitteil eines von ihr auszuführenden Computerprogramms (4) entgegen nimmt.

9. Echtzeitsteuerverfahren nach einem der obigen Ansprüche,
**dadurch gekennzeichnet, dass** die logische Logikeinheit (3) vor dem Beginn der zyklischen Ausführung der in Anspruch 1 erwähnten Schritte Parameterdaten des Prozesses (1) an die Recheneinrichtung (8) übermittelt.

10. Echtzeitsteuerverfahren nach einem der obigen Ansprüche,
**dadurch gekennzeichnet, dass** die logische Logikeinheit (3) vor dem Beginn der zyklischen Ausführung der in Anspruch 1 erwähnten Schritte über das Übertragungsmedium (7) an die Recheneinrichtung (8) ein von der Recheneinrichtung (8) auszuführendes Steuerungsprogramm (12) übermittelt.

11. Echtzeitsteuerverfahren nach einem der Ansprüche 1 bis 10, **dadurch gekennzeichnet, dass** die logische Logikeinheit (3) vor dem Beginn der zyklischen Ausführung der in Anspruch 1 erwähnten Schritte die Zykluszeit (T) über das Übertragungsmedium (7) an die Recheneinrichtung (8) übermittelt.

12. Echtzeitsteuerverfahren nach einem der Ansprüche 1 bis 10, **dadurch gekennzeichnet, dass** die logische Logikeinheit (3) vor dem Beginn der zyklischen Ausführung der in Anspruch 1 erwähnten Schritte die Zykluszeit (T) von der Recheneinrichtung (8) über das Übertragungsmedium (7) entgegen nimmt.

13. Steuerungseinrichtung eines industriellen technischen Prozesses (1), die eine Anzahl von Erfassungseinheiten (6), eine Anzahl von physikalischen Logikeinheiten (3') und eine Anzahl von Steuereinheiten (9) aufweist,
- wobei die physikalischen Logikeinheiten (3') eine einzige logische Logikeinheit (3) bilden,
- wobei die Erfassungseinheiten (6), die logische Logikeinheit (3) und die Steuereinheiten (9) im Betrieb der Steuerungseinrichtung derart zusammenwirken, dass mit einer Zykluszeit (T), die im Millisekundenbereich oder darunter liegt, wiederholt
-- die Erfassungseinheiten (6) Zustandssignale des Prozesses (1) erfassen, wobei die erfassten Zustandssignale in ihrer Gesamtheit ein Abbild des Prozesses (1) darstellen,
-- jede der Erfassungseinheiten (6) die von ihr erfassten Zustandssignale an die logische Logikeinheit (3) übermittelt,
-- die logische Logikeinheit (3) an jede der Steuereinheiten (9) die für die jeweilige Steuereinheit (9) bestimmten Steuersignale übermittelt, wobei die an die Steuereinheiten (9) übermittelten Steuersignale in ihrer Gesamtheit einen Steuerzustand des Prozesses (1) darstellen, und
-- jede der Steuereinheiten (9) entsprechend den an sie übermittelten Steuersignalen auf den Prozess (1) einwirkt,
- wobei die logische Logikeinheit (3) im Betrieb der Steuerungseinrichtung mit einer Recheneinrichtung (8) derart zusammenwirkt, dass sie mit der Zykluszeit (T) wiederholt
-- zumindest einen Teil des Abbildes des Prozesses (1) über ein Übertragungsmedium (7) an die Recheneinrichtung (8) übermittelt und
-- von der Recheneinrichtung (8) über das Übertragungsmedium (7) zumindest einen Teil des Steuerzustandes für den Prozess (1) entgegennimmt.

14. Steuerungseinrichtung nach Anspruch 13,
**dadurch gekennzeichnet, dass** die Wirkungsweise der Steuerungseinrichtung durch ein Computerprogramm (4) bestimmt ist, mit dem die Steuerungseinrichtung programmiert ist.

15. Steuerungseinrichtung nach Anspruch 14,
**dadurch gekennzeichnet, dass** sie als speicherprogrammierbare Steuerung, als numerische Steuerung oder als echtzeitfähiger Industrie-PC ausgebildet ist.

## Claims

1. Real-time control method for a control unit (2) of an industrial technical process (1), having the following steps repeatedly executed at a cycle time (T),
wherein the cycle time (T) lies in the range of milliseconds or less:
- a number of detecting units (6) detects status signals of the process (1), wherein the entirety of the detected status signals forms a representation of the process (1),
- each of the detecting units (6) transmits the status signals it has detected to a single logical logic unit (3),
- the logical logic unit (3) transmits at least part of the representation of the process (1) to a computing unit (8) via a transmission medium (7),
- the logical logic unit (3) receives at least part of a control status for the process (1) from the computing unit (8) via the transmission medium (7), wherein the control status contains control signals for a number of control units (9),
- the logical logic unit (3) transmits the control signals intended for the respective control unit (9) to each of the control units (9), wherein the entirety of the control signals transmitted to the control units (9) represents the control status for the process (1),
- each of the control units (9) acts on the process (1) based on the control signals transmitted to it.

2. Real-time control method according to claim 1,
**characterised in that**
the transmission medium (7) is a computer network (7), e.g. the Internet or a LAN.

3. Real-time control method according to claim 1,
**characterised in that**
the transmission medium (7) is a point-to-point connection (7).

4. Real-time control method according to claim 1, 2 or 3,
**characterised in that**
the transmission medium (7) comprises at least one wireless transmission medium section (15).

5. Real-time control method according to one of the preceding claims,
**characterised in that**
the transmission medium (7) comprises at least one wired transmission medium section (13, 14).

6. Real-time control method according to one of the preceding claims,
**characterised in that**
during each cycle the logical logic unit (3) checks whether the control status or part thereof is being transmitted to it by the computing unit (8), and that in the absence of the control status or part thereof the logical logic unit (3) determines emergency output signals and transmits these to the number of control units (9).

7. Real-time control method according to one of the preceding claims,
**characterised in that**
the industrial technical process (1) is a production process (1), in particular a machining process (1) of a machine tool.

8. Real-time control method according to one of the preceding claims,
**characterised in that**
before the start of the cyclical execution of the steps referred to in claim 1 the logical logic unit (3) receives a real-time part of a computer program (4) to be executed by it.

9. Real-time control method according to one of the preceding claims,
**characterised in that**
before the start of the cyclical execution of the steps referred to in claim 1 the logical logic unit (3) transmits parameter data for the process (1) to the computing unit (8).

10. Real-time control method according to one of the preceding claims,
**characterised in that**
before the start of the cyclical execution of the steps referred to in claim 1 the logical logic unit (3) transmits a control program (12) to be executed by the computing unit (8) to the computing unit (8) via the transmission medium (7).

11. Real-time control method according to one of claims 1 to 10,
**characterised in that**
before the start of the cyclical execution of the steps referred to in claim 1 the logical logic unit (3) transmits the cycle time (T) to the computing unit (8) via the transmission medium (7).

12. Real-time control method according to one of claims 1 to 10,
**characterised in that**
before the start of the cyclical execution of the steps referred to in claim 1 the logical logic unit (3) receives the cycle time (T) from the computing unit (8) via the transmission medium (7).

13. Control unit of an industrial technical process (1), which has a number of detecting units (6), a number of physical logic units (3') and a number of control units (9),
- wherein the physical logic units (3') form a single logical logic unit (3),
- wherein the detecting units (6), the logical logic unit (3) and the control units (9) cooperate in the operation of the control unit such that, repeatedly, at a cycle time (T) that lies in the range of milliseconds or less
-- the detecting units (6) detect status signals of the process (1), wherein the entirety of the detected status signals forms a representation of the process (1),
-- each of the detecting units (6) transmits the status signals it has detected to the logical logic unit (3),
-- the logical logic unit (3) transmits control signals intended for the respective control unit (9) to each of the control units (9), wherein the entirety of the control signals transmitted to the control units (9) represents a control status for the process (1), and
-- each of the control units (9) acts on the process (1) based on the control signals transmitted to it,
- wherein the logical logic unit (3) cooperates with a computing unit (8) in the operation of the control unit such that, repeatedly, at the cycle time (T) it
-- transmits at least part of the representation of the process (1) to the computing unit (8) via a transmission medium (7) and
-- receives at least part of the control status for the process (1) from the computing unit (8) via the transmission medium (7).

14. Control unit according to claim 13,
**characterised in that**
the method of working of the control unit is determined by a computer program (4), with which the control unit is programmed.

15. Control unit according to claim 14,
**characterised in that**
it is configured as a programmable controller, as a numeric controller or as a real-time-capable industrial PC.

## Revendications

1. Procédé de commande en temps réel d'un dispositif ( 2 ) de commande d'un processus ( 1 ) technique industrielle, comprenant les stades suivants exécutés de manière répétée suivant un temps ( T ) de cycle, le temps ( T ) de cycle étant de l'ordre de la milliseconde ou inférieure à la milliseconde :
- un certain nombre d'unités ( 6 ) de détection détecte des signaux d'état du processus ( 1 ), les signaux d'état détectés représentant dans leur ensemble une reproduction du processus ( 1 ),
- chacune des unités ( 6 ) de détection transmet les signaux d'état qu'elle a détectés à une unité ( 3 ) logique unique,
- l'unité ( 3 ) logique transmet au moins une partie de la reproduction du processus ( 1 ) à un dispositif ( 8 ) informatique par un support ( 7 ) de transmission,
- l'unité ( 3 ) logique reçoit du dispositif ( 8 ) informatique par le support ( 7 ) de transmission au moins une partie d'un état de commande pour le processus ( 1 ), l'état de commande contenant des signaux de commande pour un certain nombre d'unités ( 9 ) de commande,
- l'unité ( 3 ) logique transmet à chacune des unités ( 9 ) de commande les signaux de commande déterminés pour l'unité ( 9 ) de commande respective, les signaux de commande transmis aux unités ( 9 ) de commande représentant dans leur ensemble l'état de commande pour le processus ( 1 ),
- chacune des unités ( 9 ) de commande agit sur le processus ( 1 ) conformément aux signaux de commande qui lui sont transmis.

2. Procédé de commande en temps réel suivant la revendication 1,
**caractérisé en ce que** le support ( 7 ) de transmission est un réseau ( 7 ) d'ordinateur, par exemple l'Internet ou un LAN.

3. Procédé de commande en temps réel suivant la revendication 1,
**caractérisé en ce que** le support ( 7 ) de transmission est une liaison ( 7 ) point à point.

4. Procédé de commande en temps réel suivant la revendication 1, 2 ou 3,
**caractérisé en ce que** le support ( 7 ) de transmission comprend au moins un segment ( 15 ) de support de transmission sans fil.

5. Procédé de commande en temps réel suivant l'une des revendications précédentes,
**caractérisé en ce que** le support ( 7 ) de transmission comprend au moins un segment ( 13, 14 ) de support de transmission par fil.

6. Procédé de commande en temps réel suivant l'une des revendications précédentes,
**caractérisé en ce que** l'unité ( 3 ) logique contrôle, pendant chaque cycle, si l'état de commande ou sa partie lui est transmis par le dispositif ( 8 ) informatique et **en ce que** l'unité ( 3 ) logique détermine, en l'absence de l'état de commande ou de sa partie, des signaux d'émission d'urgence et les transmet au certain nombre d'unités ( 9 ) de commande.

7. Procédé de commande en temps réel suivant l'une des revendications précédentes,
**caractérisé en ce que** le processus ( 1 ) technique industriel est un processus ( 1 ) de production, notamment un processus ( 1 ) d'usinage d'une machine-outil.

8. Procédé de commande en temps réel suivant l'une des revendications précédentes,
**caractérisé en ce que** l'unité ( 3 ) logique reçoit, avant le début de l'exécution cyclique des stades mentionnés à la revendication 1, une partie en temps réel d'un programme ( 4 ) informatique qu'elle doit exécuter.

9. Procédé de commande en temps réel suivant l'une des revendications précédentes,
**caractérisé en ce que** l'unité ( 3 ) logique transmet, avant le début de l'exécution cyclique des stades mentionnés à la revendication 1, des données de paramètre du processus au dispositif ( 8 ) informatique.

10. Procédé de commande en temps réel suivant l'une des revendications précédentes,
**caractérisé en ce que**, avant le début de l'exécution cyclique des stades mentionnés à la revendication 1, l'unité ( 3 ) logique transmet, par le support ( 7 ) de transmission, au dispositif ( 8 ) informatique un programme ( 12 ) de commande s'exécutant par le dispositif ( 8 ) informatique.

11. Procédé de commande en temps réel suivant l'une des revendications précédentes,
**caractérisé en ce que** l'unité ( 3 ) logique transmet le temps ( T ) de cycle au dispositif ( 8 ) informatique par le support ( 7 ) de transmission, avant le début de l'exécution cyclique des stades mentionnés à la revendication 1.

12. Procédé de commande en temps réel suivant l'une des revendications 1 à 10,
**caractérisé en ce que** l'unité ( 3 ) logique reçoit le temps ( T ) de cycle du dispositif ( 8 ) informatique par le support ( 7 ) de transmission, avant le début de l'exécution cyclique des stades mentionnés à la revendication 1.

13. Dispositif de commande d'un processus ( 1 ) technique industriel, qui comporte un certain nombre d'unités ( 6 ) de détection, un certain nombre d'unités ( 3' ) logiques physiques et un certain nombre d'unités ( 9 ) de commande,
- dans lequel les unités ( 3' ) logiques physiques forment une unité ( 3 ) logique unique,
- dans lequel les unités ( 6 ) de détection, l'unité ( 3 ) logique et les unités ( 9 ) de commande coopèrent, lorsque le dispositif de commande fonctionne, de manière à ce qu'avec un temps ( T ) de cycle qui est de l'ordre de la milliseconde ou qui est inférieure à la milliseconde, de manière répétée
-- les unités ( 6 ) de détection détectent des signaux d'état du processus ( 1 ), les signaux d'état détectés représentant dans leur ensemble une reproduction du processus ( 1 ),
-- chacune des unités ( 6 ) de détection transmet à l'unité ( 3 ) logique les signaux d'état qu'elle a détectés,
-- l'unité ( 3 ) logique transmet à chacune des unités ( 9 ) de commande les signaux de commande déterminés pour l'unité ( 9 ) de commande respective, les signaux de commande transmis aux unités ( 9 ) de commande représentant dans leur ensemble un état de commande du processus ( 1 ), et
-- chacune des unités ( 9 ) de commande agit sur le processus ( 1 ) conformément aux signaux de commande qui lui sont transmis,
- dans lequel l'unité ( 3 ) logique coopère, lorsque le dispositif de commande fonctionne, avec un dispositif ( 8 ) informatique, de manière à ce qu'avec le temps ( T ) de cycle, de façon répétée,
-- au moins une partie de la reproduction du processus ( 1 ) est transmise par un support ( 7 ) de transmission au dispositif ( 8 ) informatique, et
-- au moins une partie de l'état de commande pour le processus ( 1 ) est reçu par le dispositif ( 8 ) informatique par l'intermédiaire du support ( 7 ) de transmission.

14. Dispositif de commande suivant la revendication 13, **caractérisé en ce que** la coopération du dispositif de commande est déterminée par un programme ( 4 ) informatique par lequel le dispositif de commande est programmé.

15. Dispositif de commande suivant la revendication 14, **caractérisé en ce qu'**il est constitué en automate programmable, en commande numérique ou en PC d'industrie apte au temps réel.
